# EUROPEAN PATENT APPLICATION

(11) **EP 2 060 473 A1**
(43) Date of publication of application: **20.05.2009**
(21) Application number: 07120972.0
(22) Date of filing: 19.11.2007
(51) Int. Cl.: B62D 11/06, B62D 12/00, B62D 11/24

(54) **Implement carrier**

(71) Applicant: GGP Sweden AB, 573 28 Tranås (SE)
(72) Inventor: Johansson, Sören, 573 43 Tranås (SE)
(74) Representative: Hjalmarsson, Magnus Axel

(57) **Abstract**

The present disclosure relates to an implement carrier 1 having a pair of wheels, including a first 13 and a second 15 wheel, wherein the first wheel is driven by a first hydraulic motor 19 and the second wheel is driven by a second hydraulic motor 21. The first and second hydraulic motors are series connected with a common hydraulic pump 23. A throttle 11 of the implement carrier is configured to control the hydraulic flow generated by the hydraulic pump, and a steering device, such as a steering wheel 9, is arranged to control the displacement of each of the first and second hydraulic motors. Thereby simple and reliable user control of the implement carrier may be achieved.

## Description

### Technical field

The present disclosure relates to an implement carrier comprising a pair of wheels, including a first and a second wheel, the first wheel being driven by a first hydraulic motor and the second wheel being driven by a second hydraulic motor, the implement carrier further comprising a steering device and a throttle, the steering device and the throttle being operable by a user.

### Background

Such implement carriers may devised e.g. with a first lever controlling the first motor and a second lever controlling the second motor. The user can thus control the driving speed of the implement carrier by means of the levers, constituting throttles and steering devices. By moving the levers to different positions, the user can further make the first and second wheels rotate at different speeds. This can be used to make the implement carrier turn, or to assist its turning, depending on the wheel configuration used.

It has been found however, that many users find it difficult to steer an implement carrier in this way.

### Summary

An object of the present disclosure is therefore to provide an implement carrier of the initially mentioned kind which can be steered and controlled in a simple and reliable way by a user.

This object is achieved by means of an implement carried as defined in claim 1.

More specifically, the first and second hydraulic motors are then series connected with a common hydraulic pump, the throttle is arranged to control the hydraulic flow generated by the hydraulic pump, and the steering device is arranged to control the displacement of each of the first and second hydraulic motors.

In such an implement carrier, the throttle is thus used to control the total flow available to the first and second motors, and the steering device is used to determine which speeds this flow will generate in the first and second motors, respectively. The result is an implement carrier with a simple control arrangement, that a user can readily utilize without extensive training, as the steering device controls the driving direction (right/left) and the throttle controls the speed.

The implement carrier may further comprise at least one caster wheel. Alternatively, at least one steered wheel may be provided which is connected to the steering device, such that the steering device can be used to turn the steered wheel.

In another configuration, the implement carrier is an articulated vehicle having a front and a rear part which are interconnected by means of a joint.

The hydraulic flow through each of the hydraulic motors may be reversible by means of a valve arrangement controlled e.g. by the steering device, such that the first and second wheels may rotate in different directions. This provides for turning with a small or even no turning radius.

### Brief description of the drawings

Fig 1 shows a side view of an implement carrier.
Fig 2 illustrates a driving arrangement for a pair of wheels.
Fig 3 shows a driving arrangement with individually reversible wheels.
Fig 4 shows a first wheel configuration.
Fig 5 shows a second wheel configuration.
Fig 6 shows a third wheel configuration.
Fig 7 shows a fourth wheel configuration.

### Detailed description

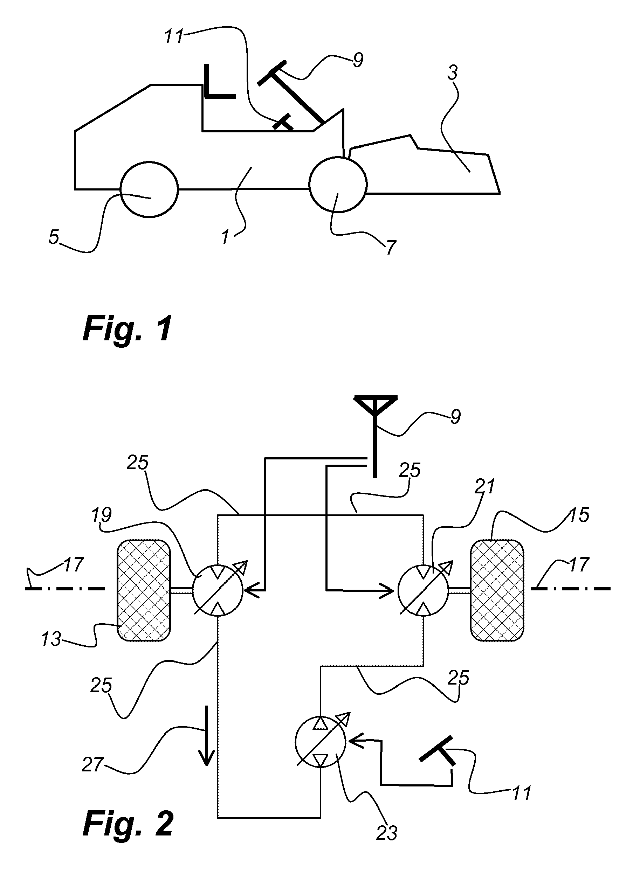

Fig. 1 illustrates, very schematically, a side view of an implement carrier 1 with a connected implement 3 in the form of a cutting assembly. The implement carrier may have the form of a vehicle, such as a ride-on lawn mower, and the cutting assembly may in some cases be replaced by other implements, such as a snow blower in winter. The implement 3 may as illustrated mounted at the front, which allows the driver of the vehicle to supervise the implement during use. However, in the context of the present disclosure, the implement may be mounted also under the vehicle, at the side thereof, or even behind the vehicle.

The illustrated vehicle has a rear 5 and a front 7 pair of wheels. However, the present disclosure is relevant also in cases where the implement carrier has one pair of wheels and a single wheel in a three wheel configuration, as will be discussed later. As illustrated, the implement carrier further has a steering device 9 and a throttle 11 which may be controlled by a user to steer the implement carrier.

Fig 2 illustrates a driving arrangement for a pair of wheels having a first wheel 13 and a second wheel 15. The pair of wheels may be the front or the rear pair, as will be discussed later. The pair of wheels are substantially placed on a common axis 17 and are arranged to rotate around this axis. Note however that the wheels may be offset from the common axis to some extent. Further note that with a common axis is here meant a geometrical axis, not necessarily a physical axis that actually interconnects the wheels. The wheels should be able to rotate with different speeds.

The first wheel 13 is connected to a first hydraulic motor 19, and the second wheel 15 is connected to a second hydraulic motor 21. The hydraulic motors used may be of the axial or radial type. The first and second motors 19, 21 are driven by a common hydraulic pump 23. The first and second motors, 19, 21 are series connected with the hydraulic pump 23 to form a closed circuit 25 through which fluid passes in a main direction 27 when the implement carrier drives in a forward direction. The hydraulic pump 23 is itself driven, e.g. by an internal combustion engine (not shown).

The displacement of an hydraulic motor may be controlled in steps or continuously. A higher displacement will obtain a greater torque and a lower rotational speed than a lower displacement, and vice-versa.

The throttle 11 of the implement carrier is arranged to control the output flow of the hydraulic pump 23. This may be achieved in different ways. One way is to let the throttle control the rotational speed of the hydraulic pump, e.g. by controlling the speed of the engine driving the pump 23. Another way is to let the throttle control the displacement of the hydraulic pump, i.e. the amount of oil flow the pump provides at a given speed. Typically, the throttle 11 may be connected to the pump 23 by means of a wire in order to control the displacement of the hydraulic pump. However, the throttle can e.g. also be devised as an electronic sensor in an electronic control arrangement which controls the hydraulic pump 23. By a throttle is here thus generally meant a device that is operable by a user to control the implement carrier's speed. The throttle may as illustrated be devised as a foot pedal although other alternatives are conceivable, e.g. a lever.

The throttle may in some cases be used also to reverse the oil flow such that the oil flows in a direction opposite to the main direction 27. In that case, both wheels 13, 15 reverse as does the implement carrier. There may also be provided an auxiliary device to achieve this effect, e.g. a reverse lever (not shown).

The steering device 9 may as illustrated be devised as a steering wheel. However other steering device types are also possible such as a lever, etc. The steering device 9 determines the relative rotational speeds of the first and second motors 19, 21, generated by the hydraulic flow output by the hydraulic pump 23, such that a steering function is provided. If the implement carrier is to drive straight forward, the steering device is in a neutral mid position. In this case, the steering device adjusts the respective displacements of the first and second hydraulic motors such that they are equal. Consequently, the torque/speed provided by the first and second hydraulic motors 19, 21 to the first and second wheels 13, 15 is the same, and the wheels do not achieve any steering function.

The user may then attempt to steer for instance to the right, e.g. by turning a steering wheel to the right. Then, the steering device 9 changes the displacement of one or both of the first and second wheels 13, 15. If it is considered that the implement carrier is driven forwards and that the first and second wheels 13, 15 are the left and right wheels, respectively, the steering functions provided may be one of the following. Firstly, the displacement of the first wheel 13 may be decreased, secondly the displacement of the second wheel 15 may be increased, and as a third option both these changes of displacement may take place simultaneously. In any case, the result is that the first (left) wheel 13 will be given a greater speed than the second (right) wheel, such that a steering function is provided that steers, or assists to steer, the implement carrier to the right. The opposite function is achieved if the user attempts to steer the implement carrier to the left. The steering device 9 may be mechanically or electronically connected to the hydraulic motors.

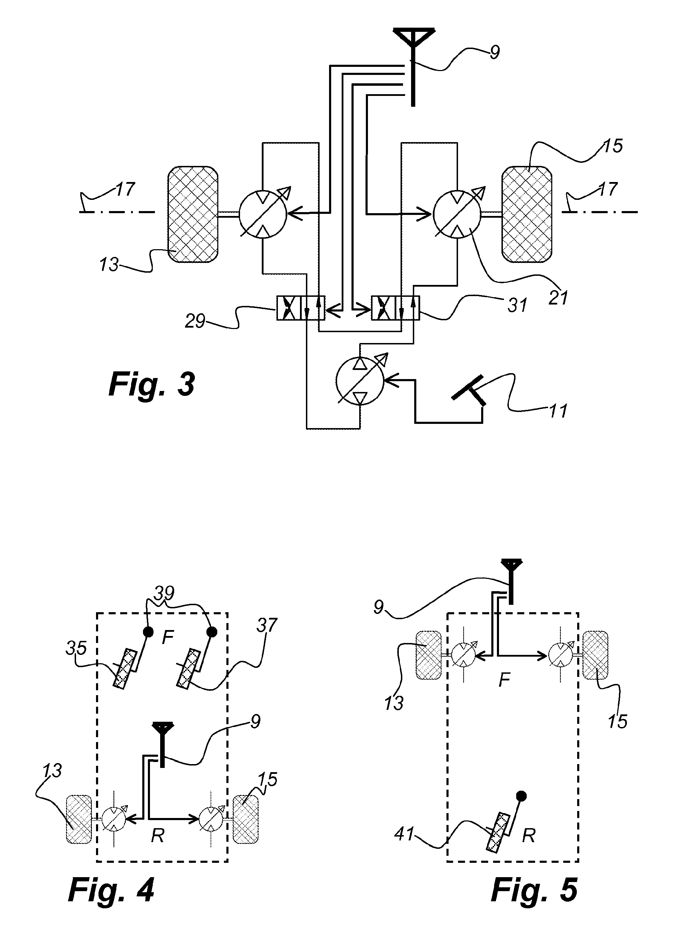

Fig 3 shows a driving arrangement with individually reversible wheels. This arrangement may provide for so called zero-turning, i.e. that the implement carrier can turn on the spot, without driving forwards or backwards.

In this arrangement, a valve configuration 29, 31 is provided for each hydraulic motor, such that the hydraulic flow can be reversed for one of the hydraulic motors without affecting the other. Then, instead of just increasing the displacement of a motor, the steering device 9 can even reverse the motor's flow and thereby its rotational direction such that e.g. the first (left) wheel 13 rotates forwards and the second (right) wheel 15 rotates backwards. The result may be that the implement makes a sharp right turn with no or little forward movement, which may be convenient e.g. in locations where there is no room for a turn with a considerable turning radius. Alternatively, the valve configuration 29, 31 may be controlled by a separate control device (not shown).

Typically, a turning of the steering wheel 9 to the right will increase the displacement of the second hydraulic motor 21. A further turning of the steering wheel will increase the displacement to maximum value, such that the right wheel 15 almost stops. A still further turning of the steering wheel will switch the valve arrangement 31 of the second motor 21 to reverse the hydraulic flow therethrough. A yet further turning of the steering wheel will then again decrease the displacement of the second motor 21, such that the flow drives the second wheel 15 in a reverse direction.

Fig 4 shows a first wheel configuration for an implement carrier. In this configuration, the wheels 13, 15 controlled by the steering device 9 as described above are the rear (R) wheels. The front wheels 35, 37 are caster wheels, i.e. wheels that are pivotably attached to the implement carrier in pivot points 39 which are offset in relation to their rotational axis such that they readily adapt their pivoting to the movements of the implement carrier. In this arrangement the steering of the implement carrier is achieved by means of the above described function only.

Fig 5 shows a second wheel configuration where the wheels 13, 15 controlled by the steering device 9 as described above are the front (F) wheels. A single caster wheel 41 is provided as the rear wheel. Also in this configuration, the above described steering functionality may be sufficient to steer the implement carrier. Needless to say, the example in fig 5 may be provided as a four wheel configuration as in fig 4. In the same way, the front wheels of fig 4 may be replaced with a single caster wheel.

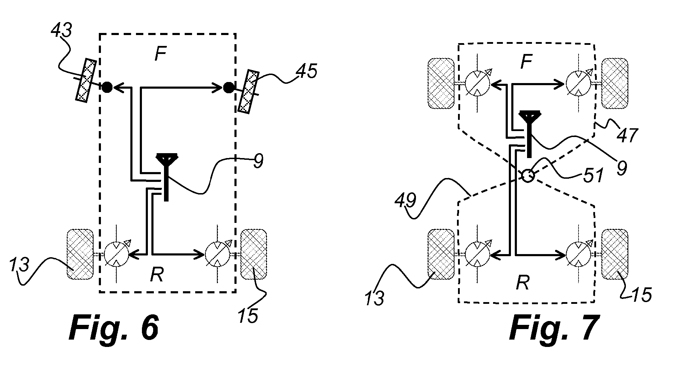

Fig 6 shows a third wheel configuration. In this configuration, the wheels 13, 15 controlled by the steering device 9 as described above are the rear (R) wheels. However, the front wheels 43, 45 are also steered by the steering device 9, but in a conventional fashion, i.e. are directly linked to the steering device. The steering device 9 can thus turn the front wheels 43, 45. In this case therefore, the rear wheels assist the turning of the implement carrier, by means of the arrangement in fig 2, in combination with the direct steering applied to the front wheels. Also this configuration can be shifted such that the wheels hydraulically controlled by the steering device 9 as described above are the front (F) wheels.

Fig 7 shows a fourth wheel configuration. This implement carrier is articulated such that a front part 47 and a rear part 49 are interconnected in a mid joint 51. The implement carrier can be flexed in the joint 51 in order to provide a steering function by shifting the front and rear wheels axes such that they are not parallel. The above described steering function can be provided to either or both of the front and rear wheel pairs. Needless to say, other wheel configurations than the ones schematically illustrated in figs 4-7 are conceivable.

The present disclosure is not restricted to the above-described embodiments, and may be varied and altered in different ways within the scope of the appended claims.

## Claims

1. An implement carrier (1) comprising a pair of wheels, including a first (13) and a second (15) wheel, the first wheel being driven by a first hydraulic motor (19) and the second wheel being driven by a second hydraulic motor (21), the implement carrier further comprising a steering device (9) and a throttle (11), the steering device and the throttle being operable by a user, **characterized in that** the first and second hydraulic motors are series connected with a common hydraulic pump (23), that the throttle is arranged to control the hydraulic flow generated by the hydraulic pump, and that the steering device is arranged to control the displacements of each of the first and second hydraulic motors.

2. An implement carrier according to claim 1, further comprising at least one caster wheel (35, 37; 41).

3. An implement carrier according to claim 1, further comprising at least one steered wheel (43, 45) which is connected to the steering device, such that the steering device can be used to turn the steered wheel.

4. An implement carrier according to claim 1, wherein the implement carrier is an articulated vehicle having a front (47) and a rear (49) part which are interconnected by means of a joint.

5. An implement carrier according to any of the preceding claims, wherein the hydraulic flow through each of the hydraulic motors is reversible by means of a valve arrangement (29, 31), such that the first and second wheels may rotate in different directions.
